# EUROPÄISCHE PATENTSCHRIFT

(11) **EP 3 502 013 B1**
(45) Veröffentlichungstag und Bekanntmachung des Hinweises auf die Patenterteilung: **24.04.2024**
(21) Anmeldenummer: 18199764.4
(22) Anmeldetag: 11.10.2018
(51) Int. Cl.: B65G 15/00, F16G 1/12, F16G 1/28, F16G 5/10, F16G 5/20

(54) **VORRICHTUNG UND VERFAHREN ZUR ERMITTLUNG EINES ABLEGEREIFEWERTS FÜR EINEN TRAGRIEMEN MIT EINGEBETTETEN, ELEKTRISCH LEITFÄHIGEN CORDSEILEN**
DEVICE AND METHOD FOR DETERMINING DISCARD CRITERIA FOR A CARRYING STRAP WITH EMBEDDED, ELECTRICALLY CONDUCTIVE CORD ROPES
DISPOSITIF ET PROCÉDÉ DE DÉTERMINATION D'UNE VALEUR DE MOMENT DE DÉPOSE POUR UNE BANDOULIÈRE À FILS ÉLÉCTROCONDUCTEURS INTÉGRÉS

(30) Priorität: 20.12.2017 DE 102017223362
(43) Veröffentlichungstag der Anmeldung: 26.06.2019
(73) Patentinhaber: ContiTech Deutschland GmbH, 30175 Hannover (DE)
(72) Erfinder: Reck, Siegfried, 31582 Nienburg/ Weser (DE); Fiss, Tim, 30519 Hannover (DE)
(74) Vertreter: Continental Corporation

(56) Entgegenhaltungen:
- DE-A1- 2 421 623
- DE-A1- 19 544 885

## Beschreibung

Die Erfindung betrifft ein Antriebssystem sowie ein Verfahren zur Ermittlung eines Ablegereifewerts für genanntes Anstriebssystem mit einen Tragriemen mit eingebetteten, elektrisch leitfähigen Cordseilen.

Tragriemen sind grundsätzlich aus dem Stand der Technik bekannt. Ein Tragriemen kann unterschiedliche Querschnittsformen aufweisen. Eine Ausgestaltung eines Tragriemens ist beispielsweise ein Flachriemen. Ein Tragriemen kann jedoch auch als ein Zahnriemen, ein Keilriemen, ein Keilrippenriemen oder beispielsweise als ein Rundriemen ausgebildet sein. Bei dem Tragriemen sind zumeist Zugträger in einen Kunststoff oder ein Gummi eingebettet. Häufig werden Stahlseile als Zugträger verwendet. Wie zuvor erläutert, ist eine Vorrichtung zur Ermittlung eines Ablegereifewerts für einen Tragriemen vorgesehen. Dieser Tragriemen weist eingebettete, elektrisch leitfähige Cordseile auf. Diese Cordseile können die Zugträger bilden bzw. die Cordseile können von den Zugträgern gebildet sein. Die Cordseile erstrecken sich jeweils in Längsrichtung des Tragriemens, vorzugsweise von einem Ende des Tragriemens zu dem gegenüberliegenden Ende. Ist der Tragriemen als ein umlaufend und/oder ringförmig geschlossener Tragriemen ausgebildet, so können die Cordseile jeweils ebenfalls umlaufen und/oder ringförmig angeordnet sein. Die Enden der Cordseile können mit Verbindungsmitteln miteinander verbunden sein.

Tragriemen werden beispielsweise für Aufzugssysteme eingesetzt. Bei derartigen Tragriemen werden oftmals Stahlseile verwendet, die sodann die eingebetteten, elektrisch leitfähigen Cordseile bilden. Bei bekannten Aufzugssystemen werden die Stahlseile der Tragriemen für gewöhnlich in bestimmten Zeitabständen optisch auf Verschleiß geprüft. Dabei wurde jedoch festgestellt, dass der Verschleiß der Stahlseile innerhalb der Tragriemen optisch kaum bestimmbar ist, wenn die Stahlseile eingebettet sind. Eine weitere Methode zur Überprüfung des Verschleiß eines Tragriemens mit eingebetteten Stahlseilen sieht deshalb vor, die Enden der Stahlseile elektrisch zu kontaktieren, um eine elektrische Messung des elektrischen Widerstands der Stahlseile auszuführen, um basierend auf der Messung auf den Verschleißzustand der Stahlseile des Tragriemens zu schließen. Dieses Verfahren weist jedoch Nachteile auf. Denn bei der Messung des elektrischen Widerstands der Stahlseile wird immer die volle Länge der Stahlseile für die Messung herangezogen. Weist jedoch ein beispielsweise sehr kurzer Abschnitt eines Stahlseiles eine besonders hohe Verschleißerscheinung auf, was sodann für den gesamten Aufzugsriemen zur Folge haben kann, dass dieser als verschlissen gilt und deshalb reif zum Ablegen ist, kann der entsprechende Verschleiß unter Umständen bei der Messung des elektrischen Widerstands zwischen den Enden des Stahlseils kaum erfasst werden. Denn die Stahlseile unterliegen aufgrund ihrer Verwendung einer hohen mechanischen Belastung, sodass die Stahlseile in ihren Durchmessern auch bei der bestimmungsmäßen Verwendung kleiner werden. Dies hat zur Folge, dass der elektrische Widerstand eines entsprechenden Stahlseils auch bei der bestimmungsgemäßen, üblichen Verwendung zunimmt. Die Unterscheidung, ob sich die Erhöhung eines elektrischen Widerstands eines Stahlseils durch die Veränderung des Durchmessers des Stahlseils oder aber durch den Verschleiß des Stahlseils an einer sehr kurzen Stelle des Stahlseils ergeben hat, ist mit der zuvor erläuterten Methode kaum feststellbar. DE 2421623 offenbart z.B. wie Wirbelstromprüfungen ausgeführt werden können um einen Verschleiß zu messen.

Der Erfindung liegt deshalb die Aufgabe zugrunde, ein Anstriebssystem und/oder ein Verfahren für eine möglichst verlässliche Ermittlung eines Ablegereifewerts für einen Tragriemen mit eingebetteten, elektrisch leitfähigen Cordseilen bereitzustellen.

Gemäß einem ersten Aspekt der Erfindung wird die zuvor genannte Aufgabe gelöst durch ein Antriebssystem den Merkmalen des Anspruchs 1. Vorgesehen ist also ein Antriebssystem zur Ermittlung eines Ablegereifewerts für einen Tragriemen mit eingebetteten, elektrisch leitfähigen Cordseilen. Das Antriebssystem weist einen Wirbelstromsensor und eine Auswerteinheit auf. Der Wirbelstromsensor ist zur Erzeugung eines elektromagnetischen Wechselfelds und zur Erfassung einer Dämpfung des Wechselfelds durch vom

Wechselfeld in den Cordseilen induzierte Wirbelströme ausgebildet. Die Auswerteinheit ist über eine Signalverbindung mit dem Wirbelstromsensor verbunden. Der Wirbelstromsensor ist dazu ausgebildet, in einer vorbestimmten Messanordnung zu dem Tragriemen angeordnet zu werden. Außerdem ist der Wirbelstromsensor dazu ausgebildet, ein Sensorsignal basierend auf der erfassten Dämpfung zu erzeugen und das Sensorsignal über die Sensorsignalleitung an die Auswerteinheit zu übertragen. Die Auswerteinheit ist dazu konfiguriert, einen Ablegereifewert für den Tragriemen basierend auf dem Sensorsignal zu ermitteln. Der Ablegereifewert repräsentiert eine Veränderung der Anordnung der Cordseile im Tragriemen zu einer vorbestimmten Referenzseilanordnung der Cordseile im Tragriemen und/oder eine Veränderung der Seildurchmesser der Cordseile zu vorbestimmten Referenzdurchmessern für die Cordseile.

Unter einem Cordseil wird vorzugsweise ein als Zugträger ausgebildetes Seil verstanden, dass in dem Tragriemen eingebettet ist. Der Tragriemen weist mehrere eingebettete Cordseile auf. Dazu können die Cordseile in Kunststoff oder in Gummi des Tragriemens eingebettet sein. Weiterhin kann es vorgesehen sein, dass die Cordseile von Kunststoff und/oder Gummi umhüllt sind, um so die Einbettung zu gewährleisten. Jedes Cordseil ist elektrisch leitfähig ausgebildet. So kann jedes Cordseil beispielsweise als ein metallisches Cordseil ausgebildet sein. Besonders bevorzugt ist jedes Cordseil als ein Stahlseil ausgebildet. In diesem Fall sind die Cordseile auch jeweils elektrisch leitfähig.

Wirbelstromsensoren sind grundsätzlich bekannt. Ein Wirbelstromsensor kann den physikalischen Effekt einer Güteveränderung eines Resonanzschwingkreises nutzen, dem durch Wirbelstromverluste in elektrisch leitfähigen Materialien Energie entzogen wird. Der Wirbelstromsensor ist dazu ausgebildet, ein elektromagnetisches Wechselfeld zu erzeugen. Außerdem ist es für die Vorrichtung vorgesehen, dass der Wirbelstromsensor in einer vorbestimmten Messanordnung zu dem Tragriemen angeordnet werden kann. Dies gewährleistet, dass das vom Wirbelstromsensor erzeugte elektromagnetische Wechselfeld auf die Cordseile des Tragriemens einwirkt. Die Cordseile des Tragriemens sind elektrisch leitfähig. Wie zuvor erläutert, führt das zu dem genannten physikalischen Effekt. Durch die in den Cordseilen induzierten Wirbelströme, welche durch das vom Wirbelstromsensor erzeugte elektromagnetische Wechselfeld hervorgerufen werden, wird eben dieses elektromagnetische Wechselfeld beeinflusst, sodass es zu einer Dämpfung des Wechselfeldes kommt. Der Wirbelstromsensor ist zur Erfassung der entsprechenden Dämpfung des Wechselfelds ausgebildet. Es ist deshalb auch vorgesehen, dass der Wirbelstromsensor dazu ausgebildet ist, ein Sensorsignal basierend auf der erfassten Dämpfung zu erzeugen. Dieses Sensorsignal repräsentiert also die erfasste Dämpfung. Der Wirbelstromsensor kann über einen begrenzten Abschnitt des Tragriemens angeordnet werden, sodass der Wirbelstromsensor in der vorbestimmten Messanordnung zu dem Tragriemen ist. Dies erlaubt es, dass mittels des Wirbelstromsensors ein begrenzter Abschnitt des Tragriemens sensorisch erfasst wird. Um einen größeren Abschnitt des Tragriemens oder sogar den gesamten Tragriemen mittels des Wirbelstromsensors sensorisch zu überprüfen, hat es sich als vorteilhaft herausgestellt, wenn der Wirbelstromsensor ortsfest angeordnet ist und der Tragriemen translatorisch an dem Wirbelstromsensor vorbeigeführt wird. Auf diese Weise kann kontinuierlich und/oder in zeitdiskreten Schritten jeder aufeinanderfolgender Abschnitt des Tragriemens mittels des Wirbelstromsensors sensorisch erfasst und/oder überprüft werden.

Das Sensorsignal wird von dem Wirbelstromsensor an die Auswerteinheit übertragen. Hierzu können der Wirbelstromsensor und/oder die Auswerteinheit entsprechend ausgebildet sein. Außerdem ist es bevorzugt vorgesehen, dass sich eine Sensorsignalleitung von dem Wirbelstromsensor zu der Auswerteinheit erstreckt, wobei das Sensorsignal von dem Wirbelstromsensor mittels der Sensorsignalleitung in die Auswerteinheit übertragbar ist.

Die Auswerteinheit ist dazu konfiguriert, einen Ablegereifewert für den Tragriemen basierend auf dem Sensorsignal zu ermitteln. Hierzu kann die Auswerteinheit beispielsweise eine Recheneinheit und einen Speicher aufweisen, von dem ein Programm mit Algorithmen gespeichert sind, die von der Recheneinheit ausführbar sind, wobei die Algorithmen dazu konfiguriert sind, den Ablegereifewert für den Tragriemen basierend auf dem Sensorsignal zu ermitteln.

Der Ablegereifewert ist vorzugsweise ein Zahlenwert. Weiterhin kann es bevorzugt vorgesehen sein, dass ein vorbestimmter Zahlenbereich für mögliche Größen des Ablegereifewerts vorgesehen und/oder vom Speicher gespeichert sind. Der Ablegereifewert kann eine Veränderung der Anordnung der Cordseile in Tragriemen in Bezug zu einer vorbestimmten Referenzseilanordnung der Cordseile im Tragriemen repräsentieren. Die vorbestimmte Referenzseilanordnung der Cordseile im Tragriemen entspricht beispielsweise der Anordnung der Cordseile im Tragriemen, wie es nach der Herstellung ist und/oder wie es durch die Herstellung des Tragriemens vorgesehen ist. Mit anderen Worten kann die vorbestimmte Referenzseilanordnung der Cordseile im Tragriemen die Anordnung der Cordseile im Tragriemen repräsentieren, wie es für einen neuwertigen Tragriemen vorbestimmt ist. Für den Ablegereifewert kann es alternativ oder ergänzend vorgesehen sein, dass der Ablegereifewert eine Veränderung der Seildurchmesser der Cordseile in Bezug zu vorbestimmten Referenzdurchmessern für die Cordseile im Tragriemen repräsentiert. Die vorbestimmten Referenzdurchmesser der Cordseile können die Durchmesser der Cordseile sein, wie es nach der Herstellung und/oder durch die Herstellung bestimmungsgemäß vorgesehen ist. Mit anderen Worten können die vorbestimmten Referenzdurchmesser der Cordseile im Tragriemen die Durchmesser der Cordseile sein, die für einen neuwertigen Tragriemen vorbestimmt sind.

Die vorbestimmte Referenzanordnung der Cordseile im Tragriemen und/oder die vorbestimmten Referenzdurchmesser der Cordseile im Tragriemen können von der Auswerteinheit gespeichert und/oder von der Auswerteinheit hinterlegt sein. Die Auswerteinheit kann also auf die vorbestimmte Referenzanordnung und/oder die vorbestimmten Referenzdurchmesser zugreifen, um den Ablegereifewert für den Tragriemen zu ermitteln. Darüber hinaus wird das Sensorsignal bei der Ermittlung des Ablegereifewerts verwendet. Das Sensorsignal wurde basierend auf der erfassten Dämpfung erzeugt und/oder kann die erfasste Dämpfung repräsentieren. Durch praktische Untersuchungen wurde festgestellt, dass Veränderungen in der Anordnung der Cordseile im Tragriemen und/oder Veränderungen der Seildurchmesser der Cordseile zu einer Veränderung der Dämpfung des Wechselfelds beitragen und/oder diese, insbesondere maßgeblich, verursachen können. Das Sensorsignal kann deshalb dazu verwendet werden, um einen Ablegereifewert für den Tragriemen zu ermitteln.

Unter der Veränderung der Anordnung der Cordseile im Tragriemen kann beispielsweise ein Wert für einen Versatz, insbesondere einen mittleren Versatz, der Anordnung der Cordseile in Bezug zur Referenzanordnung der Cordseile im Tragriemen verstanden werden. In diesem Fall kann sich die Veränderung der Anordnung auf einen Zahlenwert beziehen. So kann die Veränderung beispielsweise einen mittleren Abstand zwischen der tatsächlichen Anordnung der Cordseile im Tragriemen und der vorbestimmten Referenzseilanordnung der Cordseile im Tragriemen repräsentieren.

Unter der Veränderung der Anordnung der Cordseile kann alternativ oder ergänzend auch ein Wert für einen zeitlichen Gradienten des zuvor genannten Versatzes der Anordnung der Cordseile im Drahtseil verstanden werden. Zu diesem Zweck kann die Vorrichtung und/oder die Auswerteinheit dazu konfiguriert und/oder ausgebildet sein, um an zeitlich verschiedenen Zeitpunkten ein Sensorsignal basierend auf der jeweils erfassten Dämpfung zu erzeugen, wobei mittels des Wirbelstromsensors bevorzugt jeweils die gleiche Stelle des Tragriemens erfasst wird. Dadurch können mehrere Teilsensorsignale erzeugt werden. Diese sollen sodann das gesamte Sensorsignal abbilden. Das gesamte Sensorsignal wird vereinfacht auch kurz als Sensorsignal bezeichnet. Basierend auf einem derartigen Sensorsignal kann deshalb auch der zeitliche Gradient für den erfassten Versatz der Anordnung der Cordseile ermittelt werden. Steigt der Versatz der Cordseile im Tragriemen bezogen auf die Zeit ungewöhnlich schnell, kann dies einen Verschleiß des Tragriemens indizieren. Ein entsprechender Ablegereifewert kann deshalb mittels der Auswerteinheit ermittelt werden. Weiterhin soll darauf hingewiesen werden, dass die vorbestimmte Messanordnung den Vorteil bietet, dass die Messungen mittels des Wirbelstromsensors mit vorbestimmten Erwartungswerten vergleichbar sind und/oder dass die Messungen mit wenigen Störsignalen durchführbar sind. Dies gewährleistet eine besonders störgrößenrobuste und/oder verlässliche Messung.

Eine vorteilhafte Ausgestaltung des Antriebsystems zeichnet sich dadurch aus, dass die Auswerteinheit dazu konfiguriert ist, den Ablegereifewert basierend auf dem Sensorsignal außerdem derart zu ermitteln, dass der Ablegereifewert eine Durchgängigkeit der Cordseile repräsentiert. Vorzugsweise ist ein Cordseil durchgängig, wenn es ununterbrochen ausgebildet ist. Sofern das Cordseil einen Bruch aufweist, ist die Durchgängigkeit dieses Cordseils nicht mehr gegeben. Der Tragriemen weist mehrere Cordseile auf. Ist beispielsweise einer der Cordseile gebrochen und/oder weist einen Bruch auf, wohingegen jedoch die übrigen Cordseile keinen Bruch aufweisen bzw. ununterbrochen ausgebildet sind, so kann die Durchgängigkeit bezogen auf die gesamten Cordseile des Tragriemens reduziert sein. Dies wird in dem vorangegangenen Beispiel durch die fehlende Durchgängigkeit eines der Cordseile verursacht. Dies führt dazu, dass eine herabgesetzte Durchgängigkeit der Cordseile von dem Ablegereifewert entsprechend repräsentiert wird.

Eine weitere vorteilhafte Ausgestaltung des Antriebssystem zeichnet sich dadurch aus, dass der Wirbelstromsensor basierend auf der erfassten Dämpfung zur Ermittlung eines Sensorabstands zwischen dem Wirbelstromsensor und dem elektrisch leitfähigen Cordseil ausgebildet ist, wobei das Sensorsignal den Sensorabstand repräsentiert. Unter dem Sensorabstand wird vorzugsweise der kürzeste Abstand zwischen dem Wirbelstromsensor und dem elektrisch leitfähigen Cordseilen verstanden. Der erfasste Abstand bietet den Vorteil, dass Veränderungen in der Anordnung der Cordseile im Tragriemen und/oder eine Veränderung der Seildurchmesser der Cordseile im Tragriemen besonders einfach ermittelbar sind. Sinken die Cordseile durch, insbesondere sehr hohe, Belastungen des Tragriemens in einer Richtung quer zur Längsrichtung des Tragriemens tiefer ein und/oder werden die Cordseile aufgrund längsaxialer Beanspruchung gestreckt, was zu einer Verringerung der Durchmesser der Cordseile führt, so kann in beiden zuvor genannten Fällen ein vergrößerter Sensorabstand hervorgerufen sein. Dieser ist mittels der Vorrichtung erfassbar. Der Sensorabstand gibt also darüber Auskunft, ob es eine, insbesondere nachteilige, Änderung des Tragriemens gab. Die Veränderung der Anordnung der Cordseile im Tragriemen kann dabei im Verhältnis zu der vorbestimmten Referenzseilanordnung der Cordseile im Tragriemen mittels der Auswerteinheit verglichen werden, um den Ablegereifewert zu bestimmen. Entsprechendes kann für die Veränderung der Seildurchmesser gelten. Diese können mit den vorbestimmten Referenzdurchmessern für die Cordseile verglichen werden. Auch hierdurch kann der Ablegereifewert mittels der Auswerteinheit bestimmt sein. Besonders bevorzugt werden beide zuvor genannten Veränderungen zur Ermittlung des Ablegereifewerts mittels der Auswerteeinheit verwendet und/oder kombiniert. Um die Informationen über die Veränderungen der Auswerteeinheit zur Verfügung zu stellen, wird das Sensorsignal von dem Wirbelstromsensor an die Auswerteeinheit übertragen. Wie entsprechend zu der zuvor genannten, vorteilhaften Ausgestaltung ausgeführt, ist es besonders bevorzugt vorgesehen, dass das Sensorsignal den Sensorabstand zwischen dem Wirbelstromsensor und dem elektrisch leitfähigen Cordseilen im Tragriemen repräsentiert. Die entsprechenden Informationen können somit an die Auswerteinheit übertragen werden, um die zuvor erläuterte Ermittlung des Ablegereifewerts auszuführen.

Eine weitere vorteilhafte Ausgestaltung des Antriebssystems zeichnet sich dadurch aus, dass der Wirbelstromsensor außerdem dazu ausgebildet ist, derart zu dem Tragriemen angeordnet zu werden, so dass der Tragriemen mit einem vorbestimmten Abstand in einer Richtung quer zur Riemenlängsrichtung zu dem Wirbelstromsensor an dem Wirbelstromsensor vorbeiführbar ist oder vorbeigeführt wird. Mit anderen Worten ist es bevorzugt vorgesehen, dass der Wirbelstromsensor in dem vorbestimmten Abstand zu einer Oberfläche des Tragriemens fest angeordnet ist, sodass der Abstand zwischen dem Tragriemen in eine Richtung quer zur Riemenlängsrichtung vorbestimmt und/oder konstant ist. Außerdem kann das Antriebssystem und/oder eine andere Hilfsvorrichtung dazu ausgebildet sein, sodass der Tragriemen an dem Wirbelstromsensor in Riemenlängsrichtung vorbeiführbar ist. Der vorbestimmte, insbesondere feste, Abstand erlaubt eine besonders verlässliche und/oder störgrößenrobuste Ermittlung der Ablegereife. Denn die mit dem Sensorsignal zur Verfügung gestellten Informationen können besonders verlässlich mit der vorbestimmten Referenzseilanordung für die Conrdseile im Tragriemen und/oder mit den vorbestimmten Referenzdurchmessern für die Cordseile im Tragriemen verglichen bzw. verarbeitet werden. Hierzu kann die Auswerteinheit entsprechend ausgebildet sein.

Eine weitere vorteilhafte Ausgestaltung des Antriebssystems zeichnet sich dadurch aus, das der Wirbelstromsensor dazu ausgebildet ist, derart zu dem Tragriemen angeordnet zu werden, sodass der Tragriemen in einer Riemenlängsrichtung an dem Wirbelstromsensor vorbeiführbar ist. Dies bietet den Vorteil, dass die Ablegereife für verschiedene Stellen des Tragriemens und/oder kontinuierlich während des Vorbeiführens ermittelbar ist. Für jede Stelle des Tragriemens kann ein einzelner Ablegereifewert ermittelt werden. Jeder dieser Ablegereifewerte kann als Ablegereifeteilwert bezeichnet sein. Die Auswerteinheit kann dazu konfiguriert sein, basierend auf den Ablegereifeteilwerten den, insbesondere finalen, Ablegereifewert zu bestimmen. Dies kann beispielsweise dadurch erfolgen, dass der maximale oder der minimale Ablegereifeteilwert ausgewählt wird, sodass der entsprechend ausgewählte Ablegeteilreifewert den, insbesondere finalen, Ablegereifewert bildet. Dies hat sich in der Praxis als sinnvoll erwiesen. Denn weist beispielsweise eine Stelle des Tragriemens eine besonders hohe Abnutzung auf und/oder sind ein oder mehrere Tragseile an einer Stelle des Tragriemens gebrochen, kann der Ablegeteilreifewert, der dieser Stelle zugeordnet ist, die schwächste Stelle des Tragriemens indizieren. Es ist deshalb auch sinnvoll, dass genau dieser Ablegeteilreifewert für den, insbesondere finalen, Ablegereifewert verwendet wird.

Eine weitere vorteilhafte Ausgestaltung des Antriebssystems zeichnet sich dadurch aus, dass der Wirbelstromsensor in der vorbestimmten Messanordnung in einem vorbestimmten, festen Abstand zu einer Außenseite des Tragriemens angeordnet ist. Vorzugsweise ist der Wirbelstromsensor zu einer Rückseite des Tragriemens angeordnet. Der vorbestimmte, feste Abstand bezieht sich in diesem Fall auf den Abstand zwischen dem Wirbelstromsensor und der Rückseite des Tragriemens, sodass die Rückseite des Tragriemens die zuvor genannte Außenseite des Tragriemens bildet. Diese Ausgestaltung der Vorrichtung entspricht einer besonders einfachen Anordnung für die Messung mittels des Wirbelstromsensors. Denn der Wirbelstromsensor kann kontaktfrei zu dem Tragriemen angeordnet sein. Darüber hinaus kann die feste, vorbestimmte Messanordnung auch dann gewährleistet sein, wenn der Tragriemen in Riemenlängsrichtung an dem Wirbelstromsensor vorbeigeführt wird.

Eine weitere vorteilhafte Ausgestaltung des Antriebssystems zeichnet sich dadurch aus, dass die Vorrichtung eine Umlenkeinheit zum Umlenken des Tragriemens aufweist. Die Umlenkeinheit weist einen Innenteil und eine drehbar um und an dem Innenteil gelagert befestigte Riemenscheibe auf. Der Wirbelstromsensor weist außerdem besonders bevorzugt eine elektrische Spule auf, die zu Erzeugung des elektromagnetischen Wechselfelds ausgebildet ist. Die elektrische Spule des Wirbelstromsensors ist vorzugsweise in das Innenteil der Umlenkeinheit aufgenommen und/oder integriert. Weiterhin ist es bevorzugt vorgesehen, dass die Riemenscheibe zur Transmission des elektromagnetischen Wechselfelds ausgebildet ist. Die zuvor erläuterte Ausgestaltung der Vorrichtung bietet den Vorteil, dass die Umlenkeinheit eine Doppelfunktion gewährleisten kann. Einerseits kann sie zum Umlenken des Tragriemens ausgebildet sein. Andererseits kann sie den Wirbelstromsensor zumindest teilweise integral umfassen und/oder zumindest einen Teil des Wirbelstromsensors aufnehmen. Damit ist es möglich, dass der Wirbelstromsensor besonders einfach und zugleich präzise in einem vorbestimmten, festen Abstand zu einer Außenseite des Tragriemens angeordnet ist, dies gilt insbesondere auch dann, wenn der Tragriemen mittels der Umlenkeinheit umgelenkt wird. Denn der feste Abstand bezieht sich vorzugsweise auf den kürzesten Abstand zwischen dem Wirbelstromsensor und dem Tragriemen. Der Wirbelstromsensor weist vorzugsweise eine elektrische Spule auf, die zur Erzeugung des elektromagnetischen Wechselfelds ausgebildet ist. Da die Riemenscheibe zur Transmission des elektromagnetischen Wechselfelds ausgebildet ist, kann das elektromagnetische Wechselfeld auf den Tragriemen einwirken. Der Tragriemen weist die elektrisch leitfähige Cordseile auf. Deshalb wird in den Cordseilen ein Wirbelstrom induziert. Wie eingangs erläutert, können Veränderungen in der Anordnung der Cordseile und/oder Veränderungen der Seildurchmesser der Cordseile zu charakteristischen Dämpfungen des Wechselfelds führen, die sodann von dem Wirbelstromsensor erfassbar sind. Darüber hinaus bietet diese Ausgestaltung den besonderen Vorteil, dass der, insbesondere feste, Abstand zwischen Tragriemen und Wirbelstromsensor besonders einfach und genau eingestellt und/oder sichergestellt werden kann.

Eine weitere vorteilhafte Ausgestaltung des Antriebssystems zeichnet sich dadurch aus, dass die Riemenscheibe mittels eines Gleitlagers drehbar an dem Innenteil befestigt ist. Das Gleitlager kann zumindest teilweise von dem Innenteil und/oder von der Riemenscheibe gebildet sein. So kann eine mantelseitige Außenfläche des Innenteils als Gleitfläche ausgebildet sein. Dazu kann das Innenteil eine entsprechende Beschichtung, insbesondere Kunststoffbeschichtung, aufweisen. Die mantelseitige Innenfläche der Riemenscheibe kann als eine Gleitfläche ausgebildet sein. Dazu kann die mantelseitige Innenseite der Riemenscheibe eine Kunststoffbeschichtung aufweisen. Besonders bevorzugt ist es vorgesehen, dass das Gleitlager zur Transmission des elektromagnetischen Wechselfelds ausgebildet ist. Dies ist beispielsweise der Fall, wenn das Gleitlager zumindest im Wesentlichen von Kunststoff gebildet ist, die dem Innenteil bzw. der Riemenscheibe zugeordnet sind. Dies bietet den Vorteil, dass das erzeugte elektromagnetische Wechselfeld durch das Gleitlager und durch die Riemenscheibe transmittieren kann, um auf den Tragriemen einzuwirken. Auf die vorangegangen, vorteilhaft erläuterten Effekten wird deshalb in analoger Weise Bezug genommen.

Eine vorteilhafte Ausgestaltung des Antriebssystems zeichnet sich dadurch aus, dass der Wirbelstromsensor eine elektrische Spule aufweist, die zur Erzeugung des elektromagnetischen Wechselfelds ausgebildet ist. Die Spule bildet einen beidseitig offenen Kanal. Mit anderen Worten kann die Spule also einen beidseitig offenen Kanal aufweisen. Der Kanal ist derart ausgebildet, dass der Tragriemen in der vorbestimmten Messanordnung in Riemenlängsrichtung durch den Kanal führbar ist. Dabei ist der Kanal vorzugsweise derart ausgebildet, dass der Tragriemen ohne Kontakt und/oder kontaktlos durch den Kanal durchführbar ist. Der Kanal ist vorzugsweise zu gegenüberliegenden Enden offen ausgebildet. Außerdem kann der Kanal zumindest zu einer weiteren Seite hin offen ausgebildet sein. Weiterhin hat es sich als vorteilhaft herausgestellt, wenn der Kanal von Windungen der Spule umschlungen ist. Die Spule ist vorzugsweise derart angeordnet und/oder ausgebildet, dass im Kanal ein zumindest im Wesentlichen homogenes, elektromagnetisches Wechselfeld von der Spule erzeugbar ist. Wird der Tragriemen durch den Kanal hindurchgeführt, wenn die Spule das zuvor genannte Wechselfeld erzeugt, kann ein entsprechend zumindest im Wesentlichen homogenes elektromagnetisches Wechselfeld auf dem Tragriemen wirken. Dies erlaubt eine besonders verlässliche und/oder störgrößenrobuste Erfassung der Dämpfung des Wechselfelds. Darüber hinaus bietet diese Ausgestaltung den Vorteil, dass der Tragriemen nicht notwendigerweise mittig durch den Kanal hindurchgeführt werden muss, um die Dämpfung des Wechselfelds reproduzierbar zu erfassen. Denn in einem zumindest im Wesentlichen homogenen, elektromagnetischen Wechselfeld ist die Verschiebung des Riemens quer zur Riemenlängsrichtung zumindest im Wesentlichen ohne Einfluss auf die Dämpfung des Wechselfelds, sofern der Riemen weiterhin in dem Kanal bzw. in dem zumindest im Wesentlichen homogenen, elektromagnetischen Wechselfeld bleibt. Hieraus resultiert, dass die Ablegereife zumindest im Wesentlichen unabhängig und/oder entkoppelt von einem Abstand des Tragriemens zu den Polflächen der Spule des Wirbelstromsensors ermittelbar ist. Dies kann den Effekt haben, dass zumindest im Wesentlichen die Seildurchmesser der Cordseile die Dämpfung des Wechselfelds verursachen. Wird davon ausgegangen, dass ein Verschleiß eines Tragriemens zumindest im Wesentlichen von einer durch Benutzung verursachten Verjüngung der Cordseile dominiert ist, bietet die zuvor erläuterte Ausgestaltung die Möglichkeit, den Ablegereifewert besonders präzise und/oder störgrößenrobust zu ermitteln. Denn mögliche mechanische Störungen, die auf die präzise Anordnung der vorbestimmten Messartanordnung zum Tragriemen Einfluss nehmen könnten, woraus sich ein gegebenenfalls vorbestimmter Abstand zwischen dem Wirbelstromsensor und dem Tragriemen nicht einhalten lässt, trägt bei der zuvor erläuterten Ausgestaltung der Vorrichtung zumindest im Wesentlichen nicht oder allenfalls nur zu einem sehr kleinen Teil an dem Ergebnis der Ermittlung der Ablegereife bei. In der Praxis wurde festgestellt, dass der Einfluss vernachlässigbar klein sein kann.

Eine weitere vorteilhafte Ausgestaltung des Antriebssystems zeichnet sich dadurch aus, dass die Auswerteeinheit dazu konfiguriert ist, ein Austauschsignal zu erzeugen, wenn der ermittelte Ablegereifewert größer und/oder gleich einem vorbestimmten Ablegereifegrenzwert ist, wobei das Austauschsignal einen Austauschzustand des Tragriemens repräsentiert. Wie in der Einleitung bereits angedeutet, können vorbestimmte Eigenschaften und/oder Standards bestimmen, wann ein Tragriemen eine Abnutzung erfahren hat, die einen Austausch des Tragriemens erzwingen. Für die Vorrichtung ist es deshalb vorgesehen, dass ein Ablegereifegrenzwert vorbestimmt ist. Der Ablegereifegrenzwert indiziert dabei den Austauschzustand für einen Referenztragriemen. Wird nun ein Ablegereifewert für einen Tragriemen basierend auf dem Sensorsignal ermittelt, kann der ermittelte Ablegereifewert mit den vorbestimmten Abelgereifegrenzwert verglichen werden. Dabei wird insbesondere der vorbestimmte Ablegereifegrenzwert derart gewählt, dass der Referenz-Tragriemen zu dem tatsächlich mittels des Wirbelstromsensors erfassten Tragriemen im neuzustand korrespondiert. Ist der ermittelte Ablegerreifegrenzwert größer oder gleich dem vorbestimmten Ablegereifegrenzwert, so wird von der Auswerteinheit deshalb das Austauschsignal erzeugt. Dieses repräsentiert den Austauschzustand des Tragriemens, wenn der tatsächlich ermittelte Ablegereifewert größer oder gleich dem Wert ist, ab dem der Trageriemen ausgetauscht werden sollte. Die Vorrichtung kann dazu ausgebildet sein, dass Austauschsignal optisch und/oder akustisch, gegebenenfalls durch ein optisches und/oder akustisches Signal, auszugeben. Weiterhin kann es vorgesehen sein, dass die Vorrichtung das Austauschsignal mittels einer Übertragungsschnittstelle zur Verfügung stellt.

Eine weitere vorteilhafte Ausgestaltung des Antriebssystems zeichnet sich dadurch aus, dass die Vorrichtung eine Übertragungsschnittstelle aufweist, die zur Übertragung des Austauschsignals und/oder eines Ablegereifesignals, das den Ablegereifewert repräsentiert, an eine weitere, insbesondere externe, Einheit ausgebildet ist. Mittels der Übertragungsschnittstelle kann also beispielsweise das Austauschsignal an die, insbesondere externe, Einheit übertragen werden. Die externe Einheit kann beispielsweise eine übergeordnete Überwachungseinheit sein. Dort können sodann entsprechende Maßnahmen eingeleitet werden. Dies umfasst beispielsweise die Terminplanung zum Austausch des Tragriemens. Alternativ oder ergänzend kann es vorgesehen sein, dass die Übertragungsschnittstelle der Vorrichtung dazu ausgebildet ist, dass Ablegereifesignal an die, insbesondere externe, Einheit zu übertragen. Das Ablegereifesignal repräsentiert dabei den mittels der Auswerteeinheit ermittelten Ablegereifewert. Somit kann der Ablegereifewert über das Ablegereifesignal mittels der Übertragungsschnittstelle zur Verfügung gestellt werden. Der Ablegereifewert kann dadurch kontinuierlich und/oder stichprobenhaft überprüft werden. Wird der Tragriemen beispielsweise für ein Aufzugssystem verwendet, kann bei einer üblichen Prüfung vor Ort mittels einer externen Überwachungseinheit eine Verbindung zu der Übertragungsschnittstelle der Vorrichtung hergestellt werden, sodass es der Person vor Ort möglich ist, den Zustand des Tragriemens anhand des zuletzt ermittelten Ablegereifewerts für den Tragriemen zu erhalten. Die Person erhält also insbesondere Informationen darüber, ob der zuletzt ermittelte Ablegereifewert bereits dicht an einem vorbestimmten Ablegereifegrenzwert ist oder davon noch weit entfernt ist. In Abhängigkeit der entsprechenden Differenz kann die Person schon entsprechende Voraussagen treffen, wann gegebenenfalls ca. mit einem Austausch des Tragriemens zu rechnen ist.

Vorgesehen ist also ein Antriebssystem, das einen Tragriemen mit eingebetteten, elektrisch leitfähigen Cordseilen aufweist. Außerdem weist das Antriebssystem ein Führungssystem zum Führen, Umlenken und/oder Antreiben des Tragriemens auf. Das Antriebssystem zeichnet sich außerdem dadurch aus, dass der Wirbelstromsensor der Vorrichtung derart mit dem Führungssystem verbunden ist, sodass der Wirbelstromsensor in der vorbestimmten Messanordnung zu dem Tragriemen angeordnet ist.

Das Führungssystem kann beispielsweise Rollen, Schienen und/oder andere Elemente zum Führen eines Tragriemens aufweisen. Alternativ oder Ergänzend kann das Führungssystem Bauteile zum Umlenken eines Tragriemens aufweisen. Derartige Bauteile sind beispielswese drehbar gelagerte Umlenkrollen und/oder Umlenkscheiben. Die genannten Bauteile können also zum Umlenken des Tragriemens ausgebildet sein. Das Führungssystem kann alternativ und/oder ergänzend außerdem einen Antrieb zum Antreiben des Tragriemens aufweisen. Der Antrieb kann dazu ausgebildet sein, den Tragriemen in einer Längsrichtung des Tragriemens anzutreiben. Das Führungssystem kann außerdem dazu ausgebildet und/oder ausgestaltet sein, den Tragriemen in einem vorbestimmten Abstand zum Wirbelstromsensor und/oder durch einen Kanal einer Spule des Wirbelstromsensors zu führen.

Eine vorteilhafte Ausgestaltung des Antriebssystems zeichnet sich dadurch aus, dass die Umlenkeinheit der Vorrichtung außerdem einen Teil des Führungssystems des Antriebssystems bildet. Dies reduziert die Anzahl der notwendigen Bauteile für das Antriebssystem. Das Antriebssystem kann somit besonders kompakt sein.

Eine weitere vorteilhafte Ausgestaltung des Antriebssystems zeichnet sich dadurch aus, dass das Antriebssystem als ein Aufzugsantriebssystem ausgebildet ist, wobei der Tragriemen zum Tragen einen Aufzugskorbs ausgebildet ist. Der Tragriemen kann also dazu ausgebildet sein, um mit einer Anschlussstelle an einem Aufzugskorb kraft- und/oder formflüssig verbunden zu werden. Der Tragriemen kann in diesem Fall als ein Aufzugsriemen ausgebildet sein.

Gemäß einem zweiten Aspekt wird die eingangs genannte Aufgabe gelöst durch ein Verfahren mit den Merkmalen des Anspruchs 1 4 . Vorgesehen ist also ein Verfahren zur Ermittlung eines Ablegereifewerts für ein Antriebssystem mit einen Tragriemen mit eingebetteten, elektrisch leitfähigen Cordseilen mittels einer Vorrichtung, die eine Wirbelstromsensor und ein Auswerteinheit aufweist, wobei der Wirbelstromsensor in einer vorbestimmten Messanordnung zu dem Tragriemen angeordnet ist, und wobei das Verfahren die Schritte aufweist:
Erzeugung eines elektromagnetischen Wechselfelds mittels eines Wirbelstromsensors der Vorrichtung, so dass das Wechselfeld einen Abschnitt des Tragriemens durchdringt;
Erfassung einer Dämpfung des Wechselfelds durch vom Wechselfeld in den Cordseilen induzierte Wirbelströme mittels des Wirbelstromsensors;
Erzeugung eines Sensorsignals basierend auf der erfassten Dämpfung mittels des Wirbelstromsensors;
Übertragung des Sensorsignals von dem Wirbelstromsensor an die Auswerteeinheit der Vorrichtung, und
Ermittlung eines Ablegereifewerts für den Tragriemen basierend auf dem Sensorsignal mittels der Auswerteeinheit, wobei die Ablegereifewert eine Veränderung der Anordnung der Cordseile im Tragriemen zu einer vorbestimmten Referenzseilanordnung der Cordseile im Tragriemen und/oder eine Veränderung der Seildurchmesser der Cordseile zu vorbestimmten Referenzdurchmessern für die Cordseile repräsentiert.

Weitere Merkmale, Vorteile und/oder Anwendungsmöglichkeit der vorliegenden Erfindung ergeben sich aus der nachfolgenden Beschreibung der Ausführungsbeispiele und/oder den Figuren. Dabei bilden alle beschriebenen und/oder bildlich dargestellten Merkmale für sich und/oder in einer beliebigen Kombination der Gegenstand der Erfindung auch unabhängig von ihrer Zusammensetzung in den einzelnen Ansprüchen und/oder deren Rückbezügen. In den Figuren stehen weiterhin gleiche Bezugszeichen für gleiche oder ähnliche Objekte.
- Figur 1: zeigt eine vorteilhafte Ausgestaltung der Vorrichtung in einer schematischen Ansicht.
- Figur 2: zeigt einen Tragriemen und einen Wirbelstromsensor in einer schematischen Schnittdarstellung.
- Figur 3: zeigt einen Referenztragriemen in einer schematischen Schnittdarstellung.
- Figur 4: zeigt eine vorteilhafte Ausgestaltung einer vorbestimmten Messanordnung des Wirbelstromsensors zu den Tragriemen in einer schematischen Darstellung.
- Figur 5: zeigt Cordseil in einer schematischen Schnittdarstellung.
- Figur 6: zeigt ein Referenzcordseil in einer schematischen Schnittdarstellung.
- Figur 7: zeigt eine vorteilhafte Ausgestaltung des Wirbelstromsensors und des Tragriemens in einer schematischen Schnittdarstellung.
- Figur 8: zeigt eine weitere vorteilhafte Ausgestaltung das von einer Umlenkeinheit umfassten Wirbelstromsensors und eines Tragriemens in einer schematischen Schnittdarstellung.

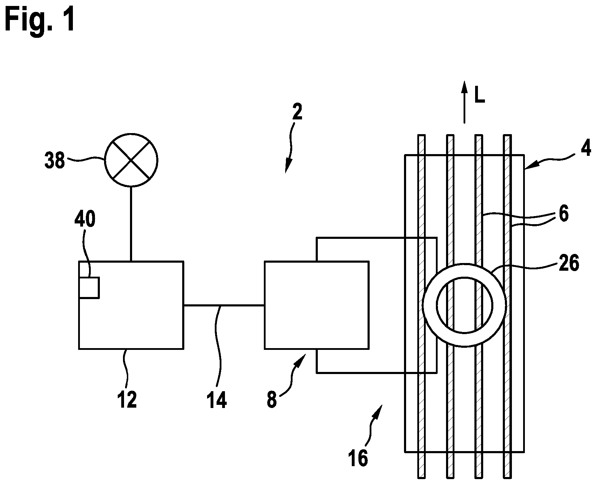

In der Figur 1 ist eine vorteilhafte Ausgestaltung der Vorrichtung 2 zur Ermittlung eines Ablegereifewerts für einen eines Tragriemen 4 mit eingebetteten, elektrisch leitfähigen Cordseilen 6 dargestellt. Die Vorrichtung 2 kann auch als Messvorrichtung 2 bezeichnet sein. Im Weiteren wird die Vorrichtung 2 jedoch nur kurz als solche bezeichnet. Die Zugfestigkeit von Cordseilen 6 in Tragriemen 4, insbesondere für Aufzugssysteme, nimmt im Laufe der Lebensdauer des Tragriemens 4 oftmals ab. Dies wird insbesondere durch die Zugbelastung bei der Verwendung des Tragriemens 4 verursacht. Außerdem können die Cordseile 6 eine Vielzahl von Filamenten 34 aufweisen. Jedes Filament 34 ist ebenfalls nach Art eines Seils ausgebildet. Um ein Cordseil 6 zu bilden, können die Filamente verdrillt sein. Bei der Verwendung des Tragriemens 4 unter Zuglast kann es zu Reibungen zwischen den Filamenten 34 eines Cordseils 6 kommen. Durch die Reibung der Filamente 34 kann der Durchmesser der einzelnen Filamente 34 und/oder des jeweiligen Cordseils 6 kleiner werden. Sobald ein Tragriemen 4 nicht mehr den gewünschten Anforderungen, insbesondere den gesetzlichen Anforderungen, entspricht, ist der Tragriemen 4 oftmals auszutauschen. Wann dieser Zustand erreicht ist, ist jedoch in der Praxis nur schwer verlässlich festzustellen. Die Vorrichtung 2 dient deshalb zur Ermittlung eines Ablegereifewerts. Außerdem ist es bevorzugt vorgesehen, dass der ermittelte Ablegereifewert mit einem Ablegereifegrenzwert verglichen wird, um ein Austauschsignal zu erzeugen, wenn der ermittelte Ablegereifewert größer oder gleich dem vorbestimmten Ablegereifegrenzwert ist. Das Austauschsignal kann sodann einen Austauschzustand des Tragriemens 4 repräsentieren. In diesem Fall ist der Tragriemen 4 auszutauschen bzw. durch einen Neuen zu ersetzen.

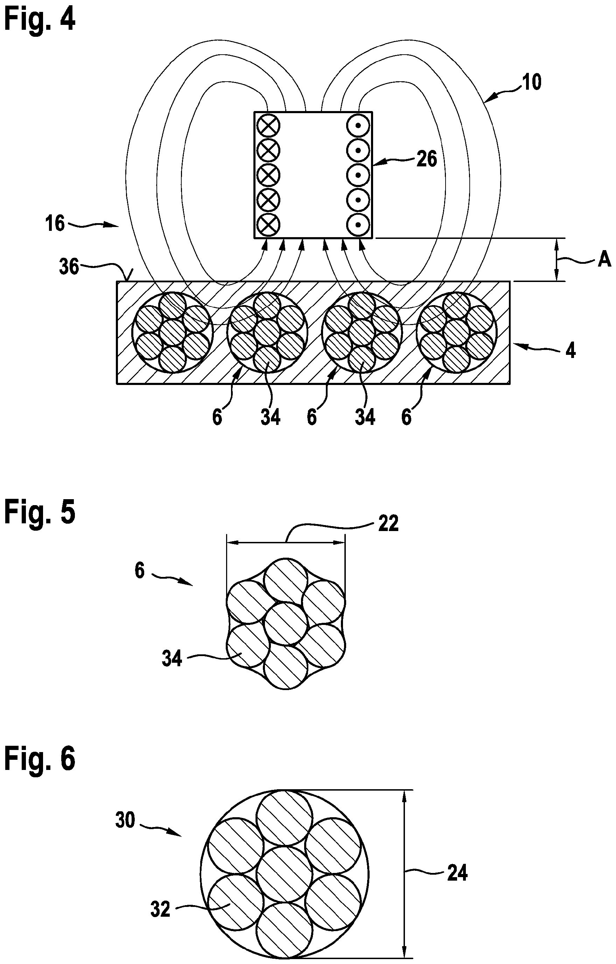

Für die Vorrichtung 2 ist zumindest ein Wirbelstromsensor 8 und eine Auswerteeinheit 12 vorgesehen. Diesbezüglich wird beispielhaft auf Figur 1 und 4 verwiesen. Der

Wirbelstromsensor 8 ist zur Erzeugung eines elektromagnetischen Wechselfelds 10 ausgebildet. Dazu kann der Wirbelstromsensor 8 eine Spule 26 aufweisen. In der Figur 4 ist die Spule 26 schematisch dargestellt. Mittels der Spule 26 des Wirbelstromsensors 8 ist das elektromagnetische Wechselfeld 10 erzeugbar. Dabei ist es vorgesehen, dass der Wirbelstromsensor 8 und insbesondere die zugehörige Spule 26 dazu ausgebildet ist bzw. sind, in einer vorbestimmten Messanordnung 16 zu dem Trageriemen 4 angeordnet zu werden. Dies ist rein beispielhaft in der Figur 4 dargestellt. Dabei ist die Spule 26 des Wirbelstromsensors 8 derart in der vorbestimmten Messanordnung 16 zu dem Tragriemen 4 angeordnet, sodass das von dem Wirbelstromsensor 8 bzw. der zugehörigen Spule 26 erzeugte, elektromagnetische Wechselfeld 10 auf die elektrisch leitfähigen Cordseile 6 des Tragriemens 4 einwirken. Das Wechselfeld 10 induziert deshalb Wirbelströme in den elektrisch leitfähigen Cordseilen 6. Dies wiederum ruft eine Dämpfung des elektromagnetischen Wechselfelds 10 hervor. Mit anderen Worten besteht also eine Wechselwirkung zwischen den vom Wirbelstromsensor 8 erzeugten, elektromagnetischen Wechselfeld 10 und den hierdurch hervorgerufenen Wirbelströmen in den elektrisch leitfähigen Cordseilen 6.

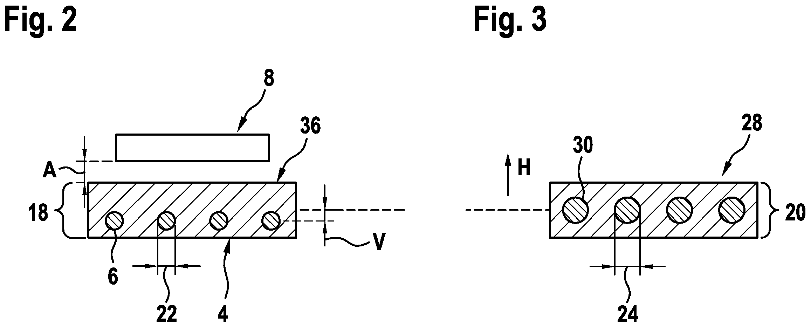

Der Wirbelstromsensor 8 ist dazu ausgebildet und/oder konfiguriert, die Dämpfung des Wechselfelds 10 zu erfassen. Dabei hängt die Dämpfung des Wechselfelds 10 von konstruktiven und/oder geometrischen Eigenschaften des Tragriemens 4, und insbesondere den zugehörigen, elektrisch leitfähigen Cordseile 6 ab. Beispielsweise hängt die Dämpfung des Wechselfelds 10 von den Durchmessern 22 der Cordseile 6 ab. Alternativ oder Ergänzend kann die Dämpfung des Wechselfelds 10 von der Anordnung 18 der Cordseile 6 im Tragriemen 4 abhängen. In diesem Zusammenhang wird auf die Zusammenschau der Figuren 2 und 3 verwiesen.

In der Figur 3 ist rein beispielhaft ein Referenztragriemen 28 in einer schematischen Querschnittsansicht gezeigt. Der Referenztragriemen 28 soll dabei den Tragriemen 4 entsprechen und zwar in dem Zustand, wie dieser ursprünglich hergestellt wurde und/oder neuwertig ist. So können die zugehörigen, elektrisch leitfähigen Referenzcordseile 30 in einer Höhenrichtung H, die quer zur Längsrichtung L des Referenztragriemens 28 ausgerichtet ist, zumindest im Wesentlichen mittig angeordnet sein. Jeder der Referenzcordseile 30 weist einen Referenzdurchmesser 24 auf. In diesem Zusammenhang wird auch auf Figur 6 verwiesen. Die Figur 6 zeigt den Querschnitt eines einzelnen Referenzcordseils 30. Aus der Figur 6 ist außerdem zu entnehmen, dass ein Referenzcordseil 30 beispielsweise aus einer Vielzahl von zugehörigen Filamenten 32, die als Referenzfilamente 32 bezeichnet sein können, aufgebaut und/oder gebildet sein.

Unter der Beanspruchung eines Tragriemens 4 können die zugehörigen Cordseile 6 einer entsprechenden Zugbelastung ausgesetzt sein. Dies führt dazu, dass die zugehörigen Filamente 34, wie es beispielsweise in Figur 5 dargestellt ist, sehr dicht zueinander angeordnet werden bzw. sind. Außerdem kann es durch die Zugbelastungen, insbesondere durch Wechsel-Zugbelastungen, dazu kommen, dass die einzelnen Filamente 34 eines jeden Cordseils 6 aneinander reiben, was zu einer Verringerung des Durchmessers 22 des zugehörigen Cordseils 6 führt. Ist das Cordseil 6 unmittelbar nach Herstellung beispielsweise derart ausgebildet, wie es in Figur 6 dargestellt ist, kann das Cordseil 6 durch die Zugbelastung nach einiger Zeit eine geometrische Veränderung fahren, sodass das Cordseil 6 im Querschnitt derart geformt ist, wie es beispielhaft in der Figur 5 dargestellt ist. Breits der Vergleich zwischen den Figuren 5 und 6 zeigt auf, dass dabei der äußere Durchmesser von dem Referenzdurchmesser 24 zu dem tatsächlichen Durchmesser 22 sinken kann.

Ein weiterer Effekt durch die Belastung des Tragriemens 4 kann aus der Zusammenschau der Figuren 2 und 3 entnommen werden. In der Figur 3 ist der Referenztragriemen 28 im Querschnitt dargestellt. Dabei weist jeder der Referenzcordseile 30 den Referenzdurchmesser 24 auf. Außerdem sind die Referenzcordseile 30 in Höhenrichtung H jeweils mittig angeordnet. Durch die Zugbelastung kann es zu der Verringerung des Durchmessers kommen, wie es zuvor erläutert wurde. Deshalb sind die Cordseile 6 des Tragriemens 4, wie sie in der Figur 2 dargestellt sind, mit einem kleineren Durchmesser 22 wiedergegeben. Außerdem ist aus der Figur 2 zu erkennen, dass die Cordseile 6 in Höhenrichtung H nach unten gewandert bzw. gedrängt wurden. Die Anordnung 18 der Cordseile 6 im Tragriemen 4 hat sich also gegenüber der Referenzanordnung 20 der Referenzcordseile 30 in Referenztragriemen 28 verändert. Insbesondere wird die Veränderung der Anordnung durch den Versatz V der Cordseile 6 in Höhenrichtung H bestimmt.

Beide zuvor erläuterten Effekte, nämlich die Veränderung der Anordnung 18 der Cordseile 6 im Tragriemen 4 sowie die Veränderung der Seildurchmesser 22 der Cordseile 6 des Tragriemens 4 verursachen eine Änderung der Dämpfung des Wechselfelds 10. Die Wechselwirkung zwischen dem Wechselfeld 10 und den in den Cordseilen 6 induzierten Wirbelströmen hängt also sowohl von der Anordnung 18 der Cordseile 6 als auch von den Seildurchmessern 22 der Cordseile 6 ab. Verändert sich nun beispielsweise der Durchmesser 22 der Cordseile 6, ist dies anhand der Dämpfung des Wechselfelds 10 mittels des Wirbelstromsensors 8 erfassbar. Entsprechendes kann für die Veränderung der Anordnung 18 der Cordseile 6 im Tragriemen 4 gelten. Durch den Versatz V, nämlich beispielsweise die Vergrößerung des Abstands zwischen den Cordseilen 6 und dem Wirbelstromsensor 8, kann beispielsweise eine geringere Dämpfung des Wechselfelds 10 auftreten. Auch dies ist mittels des Wirbelstromsensors 8 erfassbar.

Um reproduzierbare Messergebnisse zu erhalten, ist der Wirbelstromsensor 8 in einer vorbestimmten Messanordnung 16, wie es beispielsweise in der Figur 4 gezeigt ist, zu dem Tragriemen 4 angeordnet. Der Tragriemen 4 kann dabei translatorisch an dem Wirbelstromsensor 8 vorbeigeführt werden. Die vorbestimmte Messanordnung 16 kann sich deshalb auf den Abstand A zwischen einer Spule 26 des Wirbelstromsensors 8 und der Rückseite 36 des Tragriemens 4 beziehen. Dieser Abstand A sollte vorzugsweise konstant gehalten sein.

Außerdem ist der Wirbelstromsensor 8 dazu ausgebildet, das Sensorsignal basierend auf der erfassten Dämpfung zu erzeugen. Sinkt die Anordnung mindestens eines Cordseils im Tragriemen, sodass es zu dem Versatz V kommt, ist der unmittelbare Abstand zwischen dem Wirbelstromsensor 8 und den Cordseilen 6 vergrößert. Dies verursacht eine Veränderung der Dämpfung, die mittels des Wirbelstromsensors 8 erfasst ist. Außerdem ist der Wirbelstromsensor 8 dazu ausgebildet, zu einer entsprechend erfassten, nun veränderten Dämpfung ein korrespondierendes Sensorsignal zu erzeugen. Ähnlich ist es mit der Veränderung des Durchmessers 22 der Cordseile 6. Die Verkleinerung des Durchmessers 22 führt ebenfalls zu einer Vergrößerung des unmittelbaren Abstands zwischen den Cordseilen 6 und dem Wirbelstromsensor 8. Dies verursacht ebenfalls eine Veränderung der Dämpfung. Diese ist mittels des Wirbelstromsensors 8 erfassbar. Daraus resultiert, dass das Sensorsignal die entsprechend verändert, erfasste Dämpfung repräsentiert.

Der Wirbelstromsensor 8 ist mittels einer Signalverbindung 14 mit der Auswerteinheit 12 der Vorrichtung 2 verbunden. Die Signalverbindung 14 ist vorzugsweise als eine Signalleitung ausgestrahlt. Außerdem ist der Wirbelstromsensor 8 dazu ausgebildet, das Sensorsignal, das basierend auf der erfassten Dämpfung erzeugt wurde, über die Signalverbindung 14 an die Auswerteinheit 12 zu übertragen. Der Auswerteinheit 12 werden also die Informationen zur Verfügung gestellt, ob und in welchem Umfang eine Dämpfung des Wechselfelds 10 vorliegt. Das Sensorsignal muss die Dämpfung aber nicht unmittelbar repräsentieren. So kann das Sensorsignal eine von der Dämpfung abhängig, physikalische Größe repräsentieren. Dies ist beispielsweise der Abstand zwischen Wirbelstromsensor 8 und Cordseilen 6.

Es kann vorgesehen sein, dass die Auswerteinheit 12 die Informationen gespeichert hat, wie die erfasste Dämpfung bzw. das Sensorsignal zu sein hat, wenn der Wirbelstromsensor 8 den Referenztragriemen 28 in der vorbestimmten Messanordnung 16 erfasst. Alternativ oder ergänzend kann die Auswerteinheit 12 auch entsprechende Werte für die Anordnung der Referenzcordseile 30 im Referenztragriemen 28 und/oder für Referenzdurchmesser 24 der Cordseile 30 gespeichert haben.

Die Auswerteeinheit 12 ist dazu konfiguriert, ein Ablegereifewert für den Tragriemen 6 basierend auf dem Sensorsignal, dass der Auswerteinheit 12 von dem Wirbelstromsensor 8 über die Signalverbindung 14 übertragen wurde, zu ermitteln. Der Ablegereifewert repräsentiert dabei beispielsweise eine Veränderung der Anordnung 18 der Cordseile 6 im Tragriemen 4 in Bezug auf eine vorbestimmte Referenzanordnung 20 der Cordseile 30 im Tragriemen 28. Alternativ oder ergänzend kann der Ablegereifewert eine Veränderung der Seildurchmesser 22 der Cordseile 6 in Bezug zu vorbestimmten Referenzdurchmessern 24 für die Cordseile 30 repräsentieren. Mit anderen Worten kann der Ablegereifewert eine Veränderung der Cordseile 6 in Bezug auf eine neuwertige Anordnung und/oder Ausgestaltung repräsentieren. Mittels des Ablegereifewerts bietet die Vorrichtung 2 deshalb nunmehr die Möglichkeit, dass eine messbare Größe darüber Auskunft gibt, ob ein Tragriemen 4 auszutauschen ist oder nicht.

Ist der Ablegereifewert beispielsweise größer oder gleich einem vorbestimmten Ablegereifegrenzwert, so ist dies mindestens ein Indiz wenn nicht sogar ein Beweis dafür, dass der Tragriemen 4 auszutauschen ist. Die Auswerteeinheit 12 kann deshalb dazu konfiguriert sein, ein Austauschsignal erzeugen, wenn der ermittelte Ablegereifewert größer oder gleich einem vorbestimmten Ablegereifewert ist, wobei das Austauschsignal einen Austauschzustand des Tragriemens 4 repräsentiert. Die Vorrichtung 2 kann das Austauschsignal beispielsweise optisch oder akustisch ausgeben. In der Figur 1 wird die Vorrichtung 2 mit einem optischen Signalgeber 38 insbesondere einer Lampe, dargestellt. Das Austauschsignal kann mittels des optischen Signalgebers 38 ausgegeben werden. Außerdem kann die Vorrichtung 2 eine akustische Ausgabeeinheit aufweisen, mittels der das Austauschsignal oder ein entsprechendes Signal ausgebbar ist.

Weiterhin kann es vorgesehen sein, dass die Vorrichtung 2 eine Übertragungsschnittstelle 40 aufweist. Die Übertragungsschnittstelle 40 ist vorzugsweise der Auswerteeinheit 12 zugeordnet. Die Übertragungsschnittstelle 40 kann zur Übertragung des Austauschsignals und/oder eines Ablegereifesignals ausgebildet sein. Das Ablegereifesignal repräsentiert den Ablegereifewert. Mittels der Übertragungsschnittstelle 40 kann das Austauschsignal bzw. das Ablegereifesignal beispielsweise eine externe Einheit übertragen werden. Besonders bevorzugt ist es vorgesehen, dass die Übertragungsschnittstelle 40 als eine drahtgebundene Übertragungsschnittstelle 40 oder als eine schnurlose Übertragungsschnittstelle 40 bzw. als eine Funkschnittstelle ausgebildet ist.

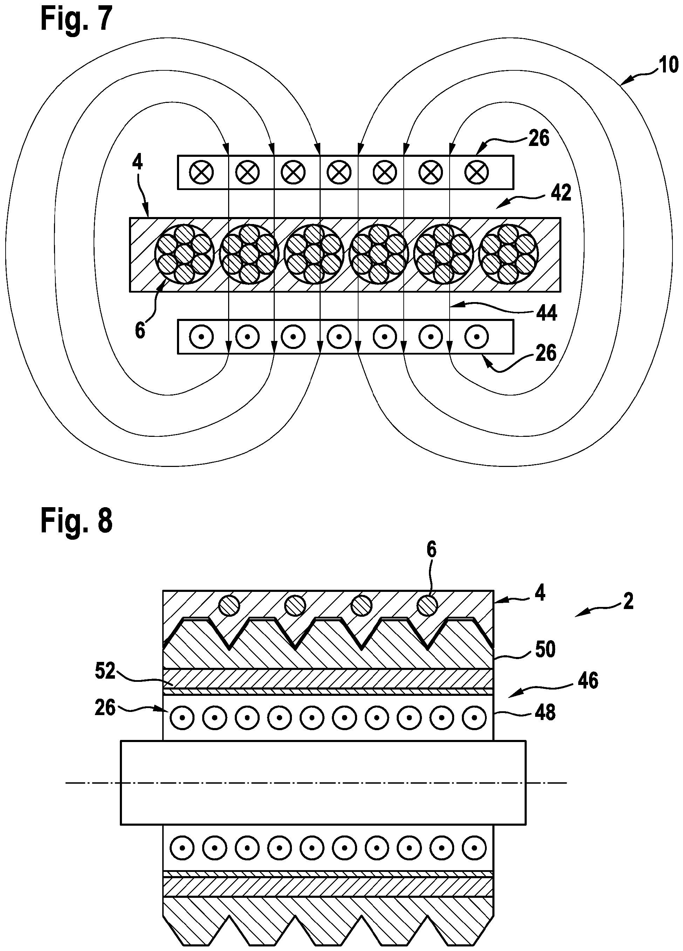

Bei praktischen Untersuchungen hat es sich als vorteilhaft herausgestellt, wenn das von den Wirbelstromsensor 8 erzeugte, elektromagnetische Wechselfeld 10 abschnittsweise als ein zumindest im Wesentlichen homogenes, elektromagnetisches Wechselfeld 44 ausgebildet ist. Denn in diesem Fall kann der Tragriemen 4 derart in oder durch das homogene, elektromagnetische Wechselfeld 44 geführt werden und eine entsprechende Dämpfung des Wechselfelds 44 hervorrufen, ohne das es dabei auf den Abstand A zwischen dem Tragriemen 4 und dem Wirbelstromsensor 8 ankommt. Eine entsprechende, beispielhafte Ausgestaltung ist in einer schematischen Querschnittsansicht in der Figur 7 gezeigt.

Für den Wirbelstromsensor 8 ist es bevorzugt vorgesehen, dass dieser eine elektrische Spule 26 aufweist, die zur Erzeugung des elektromagnetischen Wechselfelds 10 ausgebildet ist. Diese Spule 26 bildet einen beidseitig offenen Kanal 42. Der Kanal 42 ist derart ausgebildet, sodass der Tragriemen 4 in der vorbestimmten Messanordnung 16 in Riemenlängsrichtung L durch den Kanal 42 führbar ist. Die Spule 26 ist dabei vorzugsweise derart ausgebildet, dass von der Spule 26 im Kanal 42 ein zumindest im Wesentlichen homogenes, elektrisches Wechselfeld 44 erzeugt wird. Dieses homogene, elektrische Wechselfeld 44 bildet dabei einen Teil des gesamten, von der Spule 26 erzeugten, elektromagnetischen Wechselfeld 10. Da der Tragriemen 4 durch den Kanal 42 hindurchführbar ist, wirkt auf die zugehörigen Cordseile 6 das zumindest im Wesentlichen homogene, elektrische Wechselfeld 44. Die Dämpfung des zumindest im Wesentlichen homogenen, elektromagnetischen Wechselfelds 44 ist dabei unabhängig von dem Abstand des Tragriemens 4 zu der Spule 26. Somit verbleibt nur der Einfluss der Durchmesser 22 der Cordseile 6 des Tragriemens 4. Diese Ausgestaltung bietet deshalb den Vorteil, dass der Ablegereifewert zumindest im Wesentlichen nur von den Durchmessern 22 bzw. von den Veränderungen der Durchmesser 22 der Cordseile 6 des Tragriemens 4 bestimmt ist. Messungenauigkeiten bei der Einhaltung des vorbestimmten Abstands A zum Wirbelstromsensor 8 können deshalb hier zumindest im Wesentlichen nicht auftreten. Der derartig ermittelbare Ablegereifewert mittels der Auswerteinheit 12 ist deshalb besonders verlässlich.

Eine weitere vorteilhafte Ausgestaltung der Vorrichtung 2 ist in der Figur 8 in einer schematischen Querschnittsansicht dargestellt. Die Vorrichtung 2 weist dabei eine Umlenkeinheit 46 auf. Die Umlenkeinheit 46 ist zum Umlenken des Tragriemens 4 ausgebildet. Dazu kann die Umlenkeinheit 46 ein Innenteil 48 und eine drehbar um und an dem Innenteil gelagert befestigte Riemenscheibe 50 aufweisen. Das Innenteil 48 ist vorzugsweise ein zylindrisches und/oder zylinderförmiges Innenteil 48. Weiterhin ist es bevorzugt vorgesehen, dass die Riemenscheibe 50 mittels eines Lagers 52, insbesondere mittels eines Gleitlagers, drehbar an dem Innenteil 48 befestigt ist. Die Riemenscheibe 50 kann also mittels des Lagers 52 um das zylindrische Innenteil 48 rotieren. Die Riemenscheibe 50 kann eine Form zum Führen und/oder Umlenken des Tragriemens 4 aufweisen. Dazu kann der Tragriemen 4 die Riemenscheibe 50 zumindest abschnittsweise umschlingen. Der Tragriemen 4 liegt dabei in unmittelbaren Kontakt auf der Riemenscheibe 50 auf.

Weiterhin ist es vorgesehen, dass der Wirbelstromsensor 8 eine elektrische Spule 26 aufweist, die zur Erzeugung des elektromagnetischen Wechselfelds 10 ausgebildet ist und wobei die elektrische Spule 26 in das Innenteil 48 aufgenommen, insbesondere integriert, ist. Die Spule 26 ist also innerhalb des Innenteils 48 angeordnet. Hier wird vorzugsweise von einer ortsfesten Anordnung ausgegangen. Indem der Tragriemen 4 in unmittelbarem Kontakt auf der Riemenscheibe 50 zum Umlenken aufliegt, bietet diese Ausgestaltung der Vorrichtung 2 den Vorteil, dass der Abstand zwischen der Spule 26 und den elektrisch leitfähigen Cordseilen 6 im Tragriemen 4 besonders einfach konstant gehalten werden kann. Diese Anordnung bietet deshalb eine besonders störgrößenrobuste Messanordnung. Zumindest der radial außenseitige zu der elektrischen Spule 26 ausgebildete Teil des Innenteils 48 ist vorzugsweise zur Transmission des elektromagnetischen Wechselfelds 10 ausgebildet. Auch das Lager 52, insbesondere ausgebildet als Gleitlager, und ebenfalls die Riemenscheibe 50 sind zur Transmission des elektromagnetischen Wechselfelds 10 ausgebildet. Das von der Spule 26 erzeugte elektromagnetische Wechselfeld 10 kann deshalb durch das Innenteil 48, das Lager 52 und die Riemenscheibe 50 dringen, um auf die elektrisch leitfähigen Cordseile 6 des Tragriemens 4 einzuwirken. Hier findet eine Wechselwirkung mit dem induzierten Wirbelstrom statt. Die entsprechende Dämpfung des elektromagnetischen Wechselfelds 10 kann von dem Wirbelstromsensor 8 erfasst werden. Bezüglich der weiteren vorteilhaften Ausgestaltung, Effekte und/oder Vorteile wird auf die vorangegangen Erläuterungen zumindest in analoger Weise Bezug genommen.

Ergänzend sei darauf hingewiesen, dass "aufweisend" keine anderen Elemente oder Schritte ausschließt und "ein" oder "eine" keine Vielzahl ausschließt. Ferner sei darauf hingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.

## Patentansprüche

1. Antriebssystem, aufweisend:
einen Tragriemen (4) mit eingebetteten, elektrisch leitfähigen Cordseilen (6), ein Führungssystem zum Führen, Umlenken und/oder Antreiben des Tragriemens (4), und eine
Vorrichtung (2) zur Ermittlung eines Ablegereifewerts für den Tragriemen (4) aufweisend:
einen Wirbelstromsensor (8), der zur Erzeugung eines elektromagnetischen Wechselfelds (10) und zur Erfassung einer Dämpfung des Wechselfelds (10) durch vom Wechselfeld (10) in den Cordseilen (6) induzierte Wirbelströme ausgebildet ist, und
eine Auswerteeinheit (12), die über eine Signalverbindung (14) mit dem Wirbelstromsensor (8) verbunden,
wobei der Wirbelstromsensor (8) dazu ausgebildet ist, in einer vorbestimmten Messanordnung (16) zu dem Tragriemen (4) angeordnet zu werden,
wobei der Wirbelstromsensor (8) dazu ausgebildet ist, ein Sensorsignal basierend auf der erfassten Dämpfung zu erzeugen,
wobei der Wirbelstromsensor (8) dazu ausgebildet ist, das Sensorsignal über die Signalverbindung (14) an die Auswerteeinheit (12) zu übertragen, und
wobei die Auswerteeinheit (12) dazu konfiguriert ist, einen Ablegereifewert für den Tragriemen (4) basierend auf dem Sensorsignal zu ermitteln, wobei der Ablegereifewert eine Veränderung der Anordung (18) der Cordseile (6) im Tragriemen (4) zu einer vorbestimmten Referenzseilanordnung (20) der Cordseile (30) im Tragriemen (28) und/oder eine Veränderung der Seildurchmesser (22) der Cordseile (6) zu vorbestimmten Referenzdurchmessern (24) für die Cordseile (30) repräsentiert,
wobei der Wirbelstromsensor (8) der Vorrichtung (2) derart mit dem Führungssystem verbunden ist, so dass der Wirbelstromsensor (8) in der vorbestimmten Messanordnung (16) zu dem Tragriemen (4) angeordnet ist.

2. Antriebssystem nach dem vorhergehenden Anspruch, **dadurch gekennzeichnet, dass** die Auswerteeinheit (12) dazu konfiguriert ist, den Ablegereifewert basierend auf dem Sensorsignal außerdem derart zu ermitteln, dass der Ablegereifewert eine Durchgängigkeit der Cordseile (6) repräsentiert.

3. Antriebssystem nach einem der vorhergehenden Ansprüche, **dadurch gekennzeichnet, dass** der Wirbelstromsensor (8) basierend auf der erfassten Dämpfung zur Ermittlung eines Sensorabstands zwischen dem Wirbelstromsensor (8) und den elektrisch leitfähigen Cordseilen (6) ausgebildet ist, wobei das Sensorsignal den Sensorabstand repräsentiert.

4. Antriebssystem nach einem der vorhergehenden Ansprüche, **dadurch gekennzeichnet, dass** der Wirbelstromsensor (8) außerdem dazu ausgebildet ist, derart zu dem Tragriemen (4) angeordnet zu werden, so dass der Tragriemen (4) mit einem vorbestimmten Abstand A in einer Richtung quer zur Riemenlängsrichtung L zu dem Wirbelstromsensor (8) an dem Wirbelstromsensor (8) vorbeiführbar ist.

5. Antriebssystem nach einem der vorhergehenden Ansprüche, **dadurch gekennzeichnet, dass** der Wirbelstromsensor (8) dazu ausgebildet ist, derart zu dem Tragriemen (4) angeordnet zu werden, so dass der Tragriemen (4) in einer Riemenlängsrichtung L an dem Wirbelstromsensor (8) vorbeiführbar ist.

6. Antriebssystem nach einem der vorhergehenden Ansprüche, **dadurch gekennzeichnet, dass** der Wirbelstromsensor (8) in der vorbestimmten Messanordnung (16) in einem vorbestimmten, festen Abstand A zu einer Außenseite (36) des Tragriemens (4) angeordnet ist.

7. Antriebssystem nach einem der vorhergehenden Ansprüche, **dadurch gekennzeichnet, dass** die Vorrichtung (2) eine Umlenkeinheit (46) zum Umlenken des Tragriemens (4) aufweist, die Umlenkeinheit (46) ein Innenteil (48) und eine drehbar um und an dem Innenteil (48) gelagert befestigte Riemenscheibe (50) aufweist, der Wirbelstromsensor (8) eine elektrische Spule (26) aufweist, die zur Erzeugung des elektromagnetischen Wechselfelds (10) ausgebildet ist, die elektrische Spule (26) des Wirbelstromsensors (8) in das Innenteil (48) aufgenommen und/oder integriert ist, und die Riemenscheibe (50) zur Transmission des elektromagnetischen Wechselfelds (10) ausgebildet ist.

8. Antriebssystem nach dem vorhergehenden Anspruch, **dadurch gekennzeichnet, dass** die Riemenscheibe (50) mittels eines Gleitlagers (52) drehbar an dem Innenteil (48) befestigt ist.

9. Antriebssystem nach einem der vorhergehenden Ansprüche 1 bis 5, **dadurch gekennzeichnet, dass** der Wirbelstromsensor (8) eine elektrische Spule (26) aufweist, die zur Erzeugung des elektromagnetischen Wechselfelds (10) ausgebildet ist, die Spule (26) einen beidseitig offenen Kanal (42) bildet, und der Kanal (42) derart ausgebildet ist, so dass der Tragriemen (4) in der vorbestimmten Messanordnung (16) in Riemenlängsrichtung L durch den Kanal (42) führbar ist.

10. Antriebssystem nach einem der vorhergehenden Ansprüche, **dadurch gekennzeichnet, dass** die Auswerteeinheit (12) dazu konfiguriert ist, ein Austauschsignal zu erzeugen, wenn der ermittelte Ablegereifewert größer und/oder gleich einem vorbestimmten Ablegereifegrenzwert ist, wobei das Austauschsignal einen Austauschzustand des Tragriemens (4) repräsentiert.

11. Antriebssystem nach einem der vorhergehenden Ansprüche, **dadurch gekennzeichnet, dass** die Vorrichtung (2) eine Übertragungsschnittstelle (40) aufweist, die zur Übertragung des Austauschsignals und/oder eines Ablegereifesignals, das den Ablegereifewert repräsentiert, an eine weitere, insbesondere externe, Einheit ausgebildet ist.

12. Antriebssystem nach einem der vorhergehenden Ansprüche, **dadurch gekennzeichnet, dass** die Umlenkeinheit (46) der Vorrichtung (2) außerdem einen Teil des Führungssystems bildet.

13. Antriebssystem nach einem der vorhergehenden Ansprüche, **dadurch gekennzeichnet, dass** das Antriebssystem als ein Aufzugsantriebssystem ausgebildet ist, wobei der Tragriemen (4) zum Tragen eines Aufzugkorbs ausgebildet ist.

14. Verfahren zur Ermittlung eines Ablegereifewerts für ein Antriebssystem nach einem der vorhergehenden Ansprüchen mit einen Tragriemen (4) mit eingebetteten, elektrisch leitfähigen Cordseilen (6) mittels einer Vorrichtung (2), die einen Wirbelstromsensor (8) und eine Auswerteeinheit (12) aufweist, wobei der Wirbelstromsensor (8) in einer vorbestimmten Messanordnung (16) zu dem Tragriemen (4) angeordnet ist, und wobei das Verfahren die Schritte aufweist:
Erzeugung eines elektromagnetischen Wechselfelds (10) mittels eines Wirbelstromsensors (8) der Vorrichtung (2), so dass das Wechselfeld (10) einen Abschnitt des Tragriemens (4) durchdringt;
Erfassung einer Dämpfung des Wechselfelds (10) durch vom Wechselfeld (10) in den Cordseilen (6) induzierte Wirbelströme mittels des Wirbelstromsensors (8);
Erzeugung eines Sensorsignals basierend auf der erfassten Dämpfung mittels des Wirbelstromsensors (8);
Übertragung des Sensorsignals von dem Wirbelstromsensor (8) an die Auswerteeinheit (12) der Vorrichtung (2); und
Ermittlung eines Ablegereifewerts für den Tragriemen (4) basierend auf dem Sensorsignal mittels der Auswerteeinheit (12), wobei die Ablegereifewert eine Veränderung der Anordung (18) der Cordseile (6) im Tragriemen (4) zu einer vorbestimmten Referenzseilanordung (20) der Cordseile (30) im Tragriemen (28) und/oder eine Veränderung der Seildurchmesser (22) der Cordseile (6) zu vorbestimmten Referenzdurchmessern (24) für die Cordseile (30) repräsentiert.

## Claims

1. Drive system, having:
a supporting belt (4) with embedded, electrically conductive cord cables (6), a guide system for guiding, diverting and/or driving the supporting belt (4), and a device (2) for determining a discard criteria value for the supporting belt (4), having:
an eddy current sensor (8) designed to generate an electromagnetic alternating field (10) and to detect an attenuation of the alternating field (10) owing to eddy currents induced by the alternating field (10) in the cord cables (6), and
an evaluation unit (12) connected to the eddy current sensor (8) via a signal connection (14),
wherein the eddy current sensor (8) is designed to be arranged in a predetermined measuring arrangement (16) in relation to the supporting belt (4),
wherein the eddy current sensor (8) is designed to generate a sensor signal on the basis of the detected attenuation,
wherein the eddy current sensor (8) is designed to transmit the sensor signal via the signal connection (14) to the evaluation unit (12), and
wherein the evaluation unit (12) is configured to determine a discard criteria value for the supporting belt (4) on the basis of the sensor signal, wherein the discard criteria value represents a change in the arrangement (18) of the cord cables (6) in the supporting belt (4) in relation to a predetermined reference cable arrangement (20) of the cord cables (30) in the supporting belt (28) and/or a change in the cable diameters (22) of the cord cables (6) in relation to predetermined reference diameters (24) for the cord cables (30),
wherein the eddy current sensor (8) of the device (2) is connected to the guide system in such a way that the eddy current sensor (8) is arranged in the predetermined measuring arrangement (16) in relation to the supporting belt (4).

2. Drive system according to the preceding claim, **characterized in that** the evaluation unit (12) is configured to also determine the discard criteria value on the basis of the sensor signal in such a way that the discard criteria value represents a continuity of the cord cables (6).

3. Drive system according to either of the preceding claims, **characterized in that** the eddy current sensor (8) is designed to determine a sensor spacing between the eddy current sensor (8) and the electrically conductive cord cables (6) on the basis of the detected attenuation, wherein the sensor signal represents the sensor spacing.

4. Drive system according to one of the preceding claims, **characterized in that** the eddy current sensor (8) is also designed to be arranged in relation to the supporting belt (4) in such a way that the supporting belt (4) is able to be moved past the eddy current sensor (8) at a predetermined spacing A in a direction transverse to the longitudinal direction L of the belt in relation to the eddy current sensor (8).

5. Drive system according to one of the preceding claims, **characterized in that** the eddy current sensor (8) is designed to be arranged in relation to the supporting belt (4) in such a way that the supporting belt (4) is able to be moved past the eddy current sensor (8) in a longitudinal direction L of the belt.

6. Drive system according to one of the preceding claims, **characterized in that** the eddy current sensor (8) is arranged in the predetermined measuring arrangement (16) at a predetermined fixed spacing A in relation to an outer side (36) of the supporting belt (4).

7. Drive system according to one of the preceding claims, **characterized in that** the device (2) has a diverting unit (46) for diverting the supporting belt (4), the diverting unit (46) has an inner part (48) and a pulley (50) which is able to rotate around and is secured mounted to the inner part (48), the eddy current sensor (8) has an electrical coil (26) designed to generate the electromagnetic alternating field (10), the electrical coil (26) of the eddy current sensor (8) is held in and/or integrated into the inner part (48), and the pulley (50) is designed to transmit the electromagnetic alternating field (10).

8. Drive system according to the preceding claim, **characterized in that** the pulley (50) is secured by means of a sliding bearing (52) to the inner part (48) so as to be able to rotate.

9. Drive system according to one of the preceding Claims 1 to 5, **characterized in that** the eddy current sensor (8) has an electrical coil (26) designed to generate the electromagnetic alternating field (10), the coil (26) forms a channel (42) which is open on both sides, and the channel (42) is designed in such a way that the supporting belt (4) in the predetermined measuring arrangement (16) is able to be guided through the channel (42) in the longitudinal direction L of the belt.

10. Drive system according to one of the preceding claims, **characterized in that** the evaluation unit (12) is configured to generate a replacement signal when the determined discard criteria value is greater than and/or equal to a predetermined discard criteria value, wherein the replacement signal represents a replacement state of the supporting belt (4).

11. Drive system according to one of the preceding claims, **characterized in that** the device (2) has a transmission interface (40) designed to transmit the replacement signal and/or a discard criteria signal representing the discard criteria value to a further, in particular external, unit.

12. Drive system according to one of the preceding claims, **characterized in that** the diverting unit (46) of the device (2) also forms a part of the guide system.

13. Drive system according to one of the preceding claims, **characterized in that** the drive system is designed as a lift drive system, wherein the supporting belt (4) is designed to support a lift cab.

14. Method for determining a discard criteria value for a drive system according to one of the preceding claims comprising a supporting belt (4) with embedded, electrically conductive cord cables (6) by means of a device (2) having an eddy current sensor (8) and an evaluation unit (12), wherein the eddy current sensor (8) is arranged in a predetermined measuring arrangement (16) in relation to the supporting belt (4), and wherein the method includes the following steps:
generation of an electromagnetic alternating field (10) by means of an eddy current sensor (8) of the device (2) so that the alternating field (10) penetrates a portion of the supporting belt (4);
detection, by means of the eddy current sensor (8), of an attenuation of the alternating field (10) owing to eddy currents induced by the alternating field (10) in the cord cables (6);
generation, by means of the eddy current sensor (8), of a sensor signal on the basis of the detected attenuation;
transmission of the sensor signal from the eddy current sensor (8) to the evaluation unit (12) of the device (2); and
determination, by means of the evaluation unit (12), of a discard criteria value for the supporting belt (4) on the basis of the sensor signal, wherein the discard criteria value represents a change in the arrangement (18) of the cord cables (6) in the supporting belt (4) in relation to a predetermined reference cable arrangement (20) of the cord cables (30) in the supporting belt (28) and/or a change in the cable diameters (22) of the cord cables (6) in relation to predetermined reference diameters (24) for the cord cables (30).

## Revendications

1. Système d'entraînement, comprenant :
une courroie porteuse (4) avec des câbles de corde (6) électriquement conducteurs incorporés, un système de guidage destiné à guider, dévier et/ou entraîner la courroie porteuse (4), et un
dispositif (2) destiné à déterminer une valeur d'état d'usure nécessitant le remplacement pour la courroie porteuse (4) :
un capteur de courant de Foucault (8), qui est configuré pour générer un champ alternatif électromagnétique (10) et pour détecter une atténuation du champ alternatif (10) par des courants de Foucault induits par le champ alternatif (10) dans les câbles de corde (6), et
une unité d'évaluation (12) qui est reliée au capteur de courant de Foucault (8) par le biais d'une liaison de signal (14),
le capteur de courant de Foucault (8) étant configuré pour être disposé dans un arrangement de mesure (16) prédéterminé par rapport à la courroie porteuse (4), le capteur de courant de Foucault (8) étant configuré pour générer un signal de capteur basé sur l'atténuation détectée,
le capteur de courant de Foucault (8) étant configuré pour transmettre le signal de capteur à l'unité d'évaluation (12) par le biais de la liaison de signal (14), et l'unité d'évaluation (12) étant configurée pour déterminer une valeur d'état d'usure nécessitant le remplacement pour la courroie porteuse (4) sur la base du signal de capteur, la valeur d'état d'usure nécessitant le remplacement représentant une modification de la disposition (18) des câbles de corde (6) dans la courroie porteuse (4) par rapport à une disposition de câbles de référence (20) prédéterminée des câbles de corde (30) dans la courroie porteuse (28) et/ou une modification des diamètres de câble (22) des câbles de corde (6) par rapport à des diamètres de référence (24) prédéterminés pour les câbles de corde (30), le capteur de courant de Foucault (8) du dispositif (2) étant relié au système de guidage de telle sorte que le capteur de courant de Foucault (8) est disposé dans l'arrangement de mesure (16) prédéterminé par rapport à la courroie porteuse (4).

2. Système d'entraînement selon la revendication précédente, **caractérisé en ce que** l'unité d'évaluation (12) est configurée pour déterminer en outre la valeur d'état d'usure nécessitant le remplacement sur la base du signal de capteur de telle sorte que la valeur d'état d'usure nécessitant le remplacement représente une continuité des câbles de corde (6).

3. Système d'entraînement selon l'une des revendications précédentes, **caractérisé en ce que** le capteur de courant de Foucault (8) est configuré pour, sur la base de l'amortissement détecté, déterminer une distance de capteur entre le capteur de courant de Foucault (8) et les câbles de corde (6) électriquement conducteurs, le signal de capteur représentant la distance de capteur.

4. Système d'entraînement selon l'une des revendications précédentes, **caractérisé en ce que** le capteur de courant de Foucault (8) est en outre configuré pour être disposé par rapport à la courroie porteuse (4) de telle sorte que la courroie porteuse (4) peut passer devant le capteur de courant de Foucault (8) à une distance prédéterminée A dans une direction transversale à la direction longitudinale L de la courroie par rapport au capteur de courant de Foucault (8).

5. Système d'entraînement selon l'une des revendications précédentes, **caractérisé en ce que** le capteur de courant de Foucault (8) est configuré pour être disposé par rapport à la courroie porteuse (4) de telle sorte que la courroie porteuse (4) peut passer devant le capteur de courant de Foucault (8) dans une direction longitudinale L de la courroie.

6. Système d'entraînement selon l'une des revendications précédentes, **caractérisé en ce que** le capteur de courant de Foucault (8) est disposé dans l'arrangement de mesure (16) prédéterminé à une distance fixe prédéterminée A par rapport à un côté extérieur (36) de la courroie porteuse (4).

7. Système d'entraînement selon l'une des revendications précédentes, **caractérisé en ce que** le dispositif (2) comporte une unité de renvoi (46) destinée à renvoyer la courroie porteuse (4), l'unité de renvoi (46) comporte une partie intérieure (48) et une poulie (50) fixée de manière rotative autour de la partie intérieure (48) et montée sur celle-ci, le capteur de courant de Foucault (8) possède une bobine électrique (26) qui est configurée pour générer le champ électromagnétique alternatif (10), la bobine électrique (26) du capteur de courant de Foucault (8) est reçue et/ou intégrée dans la partie intérieure (48), et la poulie (50) est configurée pour la transmission du champ électromagnétique alternatif (10).

8. Système d'entraînement selon la revendication précédente, **caractérisé en ce que** la poulie (50) est fixée de manière rotative à la partie intérieure (48) au moyen d'un palier lisse (52).

9. Système d'entraînement selon l'une des revendications précédentes 1 à 5, **caractérisé en ce que** le capteur de courant de Foucault (8) possède une bobine électrique (26) qui est configurée pour générer le champ électromagnétique alternatif (10), la bobine (26) forme un canal (42) ouvert des deux côtés, et le canal (42) est configuré de telle sorte que la courroie porteuse (4) peut être guidée dans le sens longitudinal L de la courroie à travers le canal (42) dans l'arrangement de mesure (16) prédéterminé.

10. Système d'entraînement selon l'une des revendications précédentes, **caractérisé en ce que** l'unité d'évaluation (12) est configurée pour générer un signal de remplacement lorsque la valeur d'état d'usure nécessitant le remplacement déterminée est supérieure et/ou égale à une valeur d'état d'usure nécessitant le remplacement limite prédéterminée, le signal de remplacement représentant un état de remplacement de la courroie porteuse (4).

11. Système d'entraînement selon l'une des revendications précédentes, **caractérisé en ce que** le dispositif (2) possède une interface de transmission (40) qui est configurée pour transmettre à une autre unité, notamment externe, le signal d'échange et/ou un signal d'état d'usure nécessitant le remplacement qui représente la valeur d'état d'usure nécessitant le remplacement.

12. Système d'entraînement selon l'une des revendications précédentes, **caractérisé en ce que** l'unité de renvoi (46) du dispositif (2) fait en outre partie du système de guidage.

13. Système d'entraînement selon l'une des revendications précédentes, **caractérisé en ce que** le système d'entraînement est réalisé sous la forme d'un système d'entraînement d'ascenseur, la courroie porteuse (4) étant configurée pour porter une cabine d'ascenseur.

14. Procédé de détermination d'une valeur d'état d'usure nécessitant le remplacement pour un système d'entraînement selon l'une des revendications précédentes, comprenant une courroie porteuse (4) avec des câbles de corde (6) électriquement conducteurs incorporés, au moyen d'un dispositif (2) qui possède un capteur de courant de Foucault (8) et une unité d'évaluation (12), le capteur de courant de Foucault (8) étant disposé dans un arrangement de mesure (16) prédéterminé par rapport à la courroie porteuse (4), et le procédé comprenant les étapes suivantes :
génération d'un champ électromagnétique alternatif (10) au moyen d'un capteur de courant de Foucault (8) du dispositif (2), de sorte que le champ alternatif (10) traverse une portion de la courroie porteuse (4) ;
détection d'une atténuation du champ alternatif (10) par des courants de Foucault induits par le champ alternatif (10) dans les câbles de corde (6) au moyen du capteur de courant de Foucault (8) ;
génération d'un signal de capteur basé sur l'atténuation détectée au moyen du capteur de courant de Foucault (8) ;
transmission du signal de capteur du capteur de courant de Foucault (8) à l'unité d'évaluation (12) du dispositif (2) ; et
détermination d'une valeur d'état d'usure nécessitant le remplacement pour la courroie porteuse (4) sur la base du signal de capteur au moyen de l'unité d'évaluation (12), la valeur d'état d'usure nécessitant le remplacement représentant une modification de la disposition (18) des câbles de corde (6) dans la courroie porteuse (4) par rapport à une disposition de câbles de référence (20) prédéterminée des câbles de corde (30) dans la courroie porteuse (28) et/ou une modification des diamètres de câble (22) des câbles de corde (6) par rapport à des diamètres de référence (24) prédéterminés pour les câbles de corde (30).
